## Europäisches Patentamt
## European Patent Office
## Office européen des brevets

(11) Veröffentlichungsnummer: **0 155 645 B1**

# EUROPÄISCHE PATENTSCHRIFT

(45) Veröffentlichungstag der Patentschrift: **07.08.91**

(21) Anmeldenummer: **85102974.4**

(22) Anmeldetag: **14.03.85**

(51) Int. Cl.5: **C02F 9/00, C02F 1/28**

Die Akte enthält technische Angaben, die nach dem Eingang der Anmeldung eingereicht wurden und die nicht in dieser Patentschrift enthalten sind.

(54) **Einsatz für eine Wasserreinigungsvorrichtung.**

(30) Priorität: **17.03.84 DE 3409828**

(43) Veröffentlichungstag der Anmeldung:
**25.09.85 Patentblatt 85/39**

(45) Bekanntmachung des Hinweises auf die Patenterteilung:
**07.08.91 Patentblatt 91/32**

(84) Benannte Vertragsstaaten:
**AT BE CH DE FR GB IT LI LU NL SE**

(56) Entgegenhaltungen:
**EP-A- 0 023 444      DE-A- 2 233 002**
**DE-A- 2 535 848      US-A- 3 780 867**
**US-A- 4 211 660      US-A- 4 309 992**

(73) Patentinhaber: **Brita Wasser-Filter-Systeme GmbH**
**Waldstrasse 4**
**W-6204 Taunusstein 4(DE)**

(72) Erfinder: **Hankamer, Heinz**
**Baumgartenstrasse 51**
**W-6204 Taunusstein 4(DE)**

(74) Vertreter: **Weber, Dieter, Dr. et al**
**Willrath Weber und Seiffert Postfach 6145**
**Gustav-Freytag-Strasse 25**
**W-6200 Wiesbaden 1(DE)**

## Beschreibung

Die Erfindung betrifft einen Einsatz für eine Wasserreinigungsvorrichtung, bestehend aus etwa zylindermantelförmigen Seitenwänden mit an deren Endbereichen angeordnetem Siebdeckel und Siebboden und mit am oberen Ende der Seitenwände befestigter ringförmiger Dichteinrichtung, wobei der Einsatz aus einem Becherteil und einem mit diesem verbundenen Verteiler besteht, der mindestens ein sich in das Innere des Einsatzes erstreckendes Führungsrohr und einen Ringflansch zur Befestigung am Becherteil aufweist, wobei der Ringflansch an dem Sieböffnung aufweisenden Siebdeckel des Verteilers befestigt ist.

Ein solcher Einsatz ist aus der US-A-4.211.660 bekannt. Der Einsatz besteht dort zwar auch aus zwei Teilen, nämlich einem Becherteil und einem Verteiler, die äußere Oberfläche des Becherteils ist aber zugleich auch die äußere Oberfläche des Einsatzes, und es handelt sich um einen zylindermantelförmigen Filter, welcher unten durch einen flüssigkeitsundurchlässigen Boden verschlossen ist. In diesem Becherteil kann man von oben den Verteiler einsetzen, an dessen Endbereichen Siebdeckel und Siebboden mit axial verlaufenden Perforationen angebracht sind. Der Verteiler wird über eine Dichteinrichtung im oberen Endbereich so gehalten, daß sowohl seine zylindrische Außenwandung als auch die den Siebboden halternde Einfassung im Abstand vom Becher angeordnet sind.

Flüssigkeit, die mit der bekannten Vorrichtung gereinigt werden soll, tritt von außen durch den zylindermantelförmigen Filter über die ganze Fläche ein, wird in dem Ringraum nach unten unterhalb den Siebboden gezwungen und kann, diesen durchtretend, von dort nach oben in ein im Verteiler befindliches Reinigungsmaterial eintreten und die Wasserreinigungsvorrichtung durch den Siebdeckel oben verlassen.

Legt man Wert auf einen Reinigungskontakt zwischen der Flüssigkeit und dem im Verteiler befindlichen Reinigungsmaterial, dann gelingt dies bei der bekannten Vorrichtung nur in dem zylindrischen Teil des Verteilers. Der zylindermantelförmige Filter außen dient nur dem Absieben von Schmutzpartikeln. Die Durchtrittswege, auf denen die Flüssigkeit mit dem Reinigungsmittel in Berührung kommen kann, sind verhältnismäßig kurz.

Aus der US-A-4.309.992 ist eine andere Filtereinrichtung bekannt, die als ein fertiges Gesamtstück wie eine Einheit in eine Leitung eingebaut wird. Die Zuführleitung ist fest am Deckel angebracht, und die Abflußleitung befindet sich zentral und fest am Boden. Zwischen diesen beiden zylindermantelförmigen Wandungen ist ferner ein zusätzliches, konzentrisches Rohr ungleichen Durchmessers mit unten eingebrachten Löchern angeordnet, wodurch der Fließweg durch ein Reinigungsmittel schikanenartig verlängert würde, wenn alle die Rohre bzw. zylindermantelförmigen Wandungen umgebenden Räume mit Reinigungsgranulat gefüllt wären.

Die bekannte Vorrichtung ist offensichtlich nicht als Austauscheinsatz vorgesehen.

Weiterhin gibt es ein Prospektblatt der Firma Bayer "QUACAND", wonach in einem aufschraubbaren Kugelgehäuse die Patrone eines Wasserfilters als ein Behälter mit einer im Abstand von dem Patronenboden endenden Trennwand ausgebildet ist. Diese Trennwand in Form eines Tauchrohres ist fest am Becher angebracht. Die hiernach bekannte Wasserreinigungsvorrichtung muß an einen Wasserhahn mit normalem Wasserdruck angeschlossen werden, weil anderenfalls die Flüssigkeit nicht durchläuft.

Zur Verbesserung eines Einsatzes für eine Wasserreinigungsvorrichtung der eingangs genannten Art ist es Aufgabe der vorliegenden Erfindung, das Volumen und insbesondere die Länge des Fließweges der zu reinigenden Flüssigkeit durch das Reinigungsmittel zu vergrößern, wobei die Herstellung des Einsatzes, einschließlich der Befüllung, einfach ist und der Einsatz als Austauschgerät verwendet werden kann.

Zur Schaffung eines solchen Einsatzes und zur Lösung der vorstehend genannten Aufgabe wird erfindungsgemäß vorgesehen, daß im Becherteil mit Seitenwand ein sich in das Innere des Einsatzes erstreckendes inneres Führungsrohr angebracht ist, welches Siebeinrichtungen aufweist und gegenüber dem am Verteiler angebrachten äußeren Führungsrohr einen ungleichen Durchmesser derart hat, daß die beiden Führungsrohre im zusammengebauten Zustand konzentrisch zueinander angeordnet sind, daß am offenen Ende des Becherteils ein Ringflansch angebracht ist und daß die Sieböffnungen des Verteilers in einer zylindermantelförmigen Wandung angeordnet sind.

Zur Verlängerung des Fließweges der zu reinigenden Flüssigkeit weist der Becherteil, der nach außen durch die Seitenwand begrenzt wird, zusätzlich ein sich in das Innere, nämlich innerhalb dieser Seitenwandung erstreckendes Führungsrohr auf, welches fest am Becher angebracht ist. Durch an diesem zusätzlichen Führungsrohr angebrachte Siebeinrichtungen ist ein hoher Füllungsgrad mit Reinigungsmittel möglich, welches weder durch den Flüssigkeitsdurchlauf in den Auslauf ausgespült wird noch durch quer verlaufende Hohlräume kurzgeschlossen werden kann. Vielmehr muß die Flüssigkeit längs des gesamten Führungsrohres durch das Reinigungsmittel hindurchlaufen, so daß ein intensiver Kontakt zwischen der zu reinigenden Flüssigkeit und dem Granulat für die Reinigung gewährleistet ist. Die Anordnung der verschiedenen Rohre mit ungleichem Durchmesser derart, daß sie im zusammengebauten Zustand konzentrisch zueinander sind, erhöht die Anordnung von Schikanen und damit die Länge des Fließweges für die zu reinigende Flüssigkeit.

Um den Einsatz nach außen hin abzudichten, ist nicht nur am Verteiler sondern insbesondere auch am offenen Ende des Becherteils ein Ringflansch angebracht. Beide Flansche werden beim Zusammenbau aneinander befestigt, vorzugsweise in abdichtender Weise. Mit Vorteil dient der Ringflansch durch seinen Eingriff mit dem anderen Ringflansch einerseits der Aufhängung des Verteilers im Becherteil und andererseits als Dichteinrichtung nicht nur des Einsatzes als solchem nach außen hin sondern auch beim Einsetzen des Einsatzes in den Trichter der gesamten Wasserreinigungsvorrichtung.

Der Verteiler weist Sieböffnungen auf, die in einer zylindermantelförmigen Wandung angeordnet sind, wodurch die Vernetzungsgefahr gegenüber einfachen Löchern oder axial angeordneten Perforationen erheblich verringert und damit die Durchtrittsmöglichkeit der zu reinigenden Flüssigkeit verbessert ist.

Das Reinigungsmittel besteht beispielsweise aus einem Granulat oder auch aus Aktivkohle. Vorzugsweise ist ein geeignetes Reinigungsmittel für Brauchwasser eine durch eine Oberflächenbehandlung im wesentlichen keimfrei gemachte Aktivkohle, beispielsweise durch Versilbern der Oberfläche derselben. Es können aber auch andere Granulate, wie z.B. Ionenaustauscher usw., verwendet werden.

Wenn der Einsatz mit einem trichterförmigen Teil der Wasserreinigungsvorrichtung verbunden wird, versteht sich für den Endverbraucher, daß das oben in den trichterförmigen Teil zugegossene Frischwasser durch die Hülse und damit das Reinigungsmittel hindurchfließen soll. Die Fließgeschwindigkeit darf zwar nicht zu groß sein, eine Behinderung durch vernetzte Siebe ist jedoch verständlicherweise unerwünscht.

Die Austauschbarkeit des gesamten Einsatzes zusammen mit dem Reinigungsmittel hat den Vorteil, daß der Endverbraucher nicht mit dem Reinigungsmittel selbst in Berührung kommt und damit nicht Keine in die losen Körner einschleppen kann. Hierdurch wird eine größtmögliche Hygiene erreicht, insbesondere die Vermeidung unerwünschter Verkeimung. Dazu aber muß der mit Reinigungsmittel gefüllte Einsatz als Ganzes in einen an sich bekannten Trichter eingesetzt und nach Erschöpfung der Reinigungswirkung herausgenommen werden können, um durch einen neuen, mit frischem Reinigungsmittel gefüllten Einsatz ersetzt zu werden.

Zwar hat man mit bekannten Einsätzen, deren Fließweg gleich der Höhe des Einsatzes selbst war, recht gute Wirkungen erzielt, durch die vielfache Vergrößerung der Weglänge, welche das zu reinigende Wasser durch das Reinigungsmittel zu durchlaufen hat, wird jedoch die Wirkung erheblich verbessert.

Der neue Einsatz weist nicht ein nach oben ragendes Entlüftungsrohr, sondern einen besonders ausgestalteten Siebdeckel auf, der nämlich eine im Gebrauchszustand in der horizontalen Ebene liegende Stirnwand und eine am Rand derselben sich nach unten anschließende zylinderförmige Wandung aufweist. In dieser zylinderförmigen Wandung, gegebenenfalls teilweise auch in der Stirnwand, befinden sich die erwünschten Siebschlitze. Wenn in der beschriebenen Weise der Ringflansch des Siebdeckels am unteren Ende dieser Siebschlitze aufweisenden zylinderförmigen Wandung angeordnet ist und in direkter Berührung mit dem anderen Ringflansch steht, der sich am oberen Ende des Becherteils befindet, dann kann man zur Vermeidung des Vernetzens der Siebschlitze erreichen, daß die Flüssigkeit nur zum geringen Teil oder nicht in den Raum des Siebdeckels bei der Benutzung vordringt. Mit anderen Worten ist der Raum im Siebdeckel zwischen der Stirnwand und dem oberen Ringflansch mit Luft gefüllt, und eindringende Flüssigkeit wird zunächst im unteren Bereich der Siebschlitze eintreten, so daß in deren oberen Bereich die Luft austreten kann. Folglich ist ein Vernetzen ausgeschaltet.

Die Ringflansche und insbesondere der untere, am Becherteil angebrachte Ringflansch, dient gleichzeitig als Dichtung zwischen dem im Gebrauch mit Flüssigkeit gefüllten trichterförmigen Teil und dem Einsatz bzw. dem unter dem Trichter befindlichen Auffangbehälter. Es handelt sich hier zwar nicht um eine absolute Dichtigkeit, denn die Ringflansche sind lediglich auf die Mittelöffnung des trichterförmigen Teils aufgelegt, die Praxis hat aber gezeigt, dar die durch dieses Auflegen erreichte Dichtwirkung vollauf genügt, so daß die sich im Trichter befindliche Flüssigkeit nur durch den Einsatz und das Reinigungsmittel hindurchfließend den Auffangbehälter erreichen kann.

Zweckmäßig ist es gemäß der Erfindung, wenn die Siebeinrichtungen am inneren Führungsrohr oben und/oder unten angeordnet sind. Im allgemeinen wird es bevorzugt sein, die Siebeinrichtung unten am inneren Führungsrohr anzuordnen. Dadurch erhält man eine Volumenvergrößerung für das Filtermaterial. Das Filtermaterial bzw. das Reinigungsmittel befindet sich, wie schon erwähnt, in und um die Führungsrohre im Bereich des Becherteils. Auf diese Weise ergibt sich ein Strömungsweg für die Flüssigkeit, die zunächst in den Siebdeckel oben außerhalb des äußeren, am Verteiler angebrachten Führungsrohres eindringt und an dessen Außenwand im ganzen Ringraum zwischen äußerem Führungsrohr und äußerer Wandung des Becherteils nach unten strömt. Nach dieser Vorreinigung wird die Strömungsrichtung am unteren Ende des äußeren Führungsrohres um 180° gedreht, und die Flüssigkeit strömt nun außerhalb des inneren Führungsrohres und innenhalb des äußeren Führungsrohres in den sich durch diese beiden Rohre ergebenden Ringraum nach oben bis zum Ende des inneren Führungsrohres. Dort erfolgt abermals eine Richtungsänderung des Fließweges um etwa 180°, so daß die Flüssigkeit zuletzt durch das innere Führungsrohr nach unten und dort herausfließen kann.

Sind die Siebeinrichtungen am inneren Führungsrohr nun unten angeordnet, dann versteht sich, daß auch auf dem zuletzt beschriebenen Drittel des Strömungsweges der zu reinigenden Flüssigkeit Reinigungsmittel im Raum innerhalb des inneren Führungsrohres zur Verfügung steht.

Es kann aber auch zweckmäßig sein, wenn erfindungsgemäß die Siebeinrichtung am oberen Ende des inneren, oben geschlossenen Führungsrohres kranzartic angeordnete, gerade Siebschlitze aufweist. Dann ist die Flüssigkeitsverteilung verbessert, denn das außen an dem inneren Führungsrohr herauffließende Wasser oder die Flüssigkeit kann dann nicht wie in dem zuerst beschriebenen Fall über den Rand und auf selbstgesuchten Wegen in den Raum innerhalb des inneren Führungsrohres hinunterfließen, sondern die zu reinigende Flüssigkeit muß durch die Siebschlitze am oberen Ende des inneren Führungsrohres hindurchströmen. Die kranzartige Verteilung der vorzugsweise gerade ausgestalteten Siebschlitze erlaubt eine Vergleichmäßigung des hereindringenden Wassers oder der Flüssigkeit.

Denkbar ist aber auch die Möglichkeit, daß sowohl oben als auch unten am inneren Führungsrohr eine Siebeinrichtung angeordnet ist, beispielsweise oben der Kranz der geraden Siebschlitze und unten eine andere Art Sieb. Dann kann im Inneren des Führungsrohres ein anderes Reinigungsmittel eingesetzt werden als außerhalb. Mit anderen Worten sind dadurch verschiedene Filtermedien getrennt in dem Einsatz anzuordnen. Wenn beispielsweise in einem ersten Befüllungsvorgang nur das innere Führungsrohr gefüllt wird, kann in einem zweiten Befüllungsvorgang der Doppelringraum außerhalb des schon gefüllten inneren Führungsrohres und innerhalb der Außenwandung des Becherteils mit dem anderen Material gefüllt werden.

Bei weiterer vorteilhafter Ausgestaltung der Erfindung sind die Siebschlitze des Siebdeckels gerade und kranzartig angeordnet, und vorzugsweise sind die Siebschlitze des Siebbodens gekrümmt und auf konzentrischen Kreislinien angeordnet. Während zuvor von den Siebeinrichtungen am inneren Führungsrohr gesprochen wurde, werden jetzt die Siebschlitze am Siebdeckel erörtert. Auch diese können gerade ausgestaltet und kranzartig angeordnet sein. Die Form des Siebdeckels mit Stirnwand und zylinderförmiger Seitenwandung, die sich vom der Stirnwand bis zum oberen Ringflansch erstreckt, wurde bereits besprochen. Bevorzugt ist es, wenn die geraden Siebschlitze in dieser zylinderförmigen Wandung angeordnet sind, wobei die Richtung der geraden Siebschlitze mit der Längsachse der zylindrischen Wandung übereinstimmt. Die Richtung kann aber auch um 90° verdreht sein, so daß die Siebschlitze sich am Umfang der zylindrischen Wandung auf Kreislinien erstrecken. Weniger erwünscht ist die Anordnung von Siebschlitzen in der Stirnwand allein, weil dann wiederum das Problem der Vernetzung und Durchflußhinderung auftritt. Die Kombination von kurzen, vom Rand nach innen ragenden geraden Siebschlitzen in der Stirnwand mit Siebschlitzen in der zylinderförmigen Wandung hat sich aber als günstig erwiesen.

Erfindungsgemäß ist ferner vorgesehen, daß das äußere Führungsrohr am Siebdeckel befestigt ist. Bei der oben beschriebenen Flüssigkeitsführung wurde diese Maßnahme bereits vorausgesetzt, die aber nicht unbedingt zwingend ist. Durch die Anbringung des äußeren Führungsrohres am Siebdeckel wird die zu reinigende Flüssigkeit, die von oben durch die Siebschlitze in Siebdeckel eindringt, zuerst nach unten gezwungen in den Ringraum zwischen dem äußeren Führungsrohr und der Außenwandung des Becherteils.

Außerdem läßt sich der Becher dann von oben einfach befüllen. Unter der Annahme, daß entweder die Siebeinrichtungen am unteren Ende des Führungsrohres angeordnet (oder wenn sie oben angeordnet sind und das innere Führungsrohr mit einem anderen Reinigungsmittel bereits gefüllt ist) sind, genügt ein weniger achtsames Befüllen des Becherteils von oben bis zum Rand, d.h. bis zur Höhe des unteren Randflansches. Dann wird der Verteiler mit dem äußeren Führungsrohr von oben eingeschoben, aufgesetzt und durch Ultraschallschweißen verbunden, d.h. der obere und der untere Ringflansch werden durch Ultraschallschweißung dichtend miteinander verbunden. Eine Klebung ist nicht bevorzugt, wenn man sich im Nahrungsmittelbereich bewegt (Trinkwasser).

Zweckmäßig ist es gemäß der Erfindung auch, wenn die Länge beider Führungsrohre etwa gleich groß ist und wenn die Länge des inneren Führungsrohres gleich der Höhe der Seitenwandung des Becherteils ist. Diese Maßnahme begünstigt nicht nur das vorstehend beschriebene vorteilhafte Befüllen des Becherteils, sondern es stellt auch durch die Länge des inneren Führungsrohres sicher, daß der Ringraum im Siebdeckel nicht mit Reinigungsmittel gefüllt ist und daher vorzugsweise mit Luft befüllt bleibt, so daß der Durchfluß durch die Siebschlitze am Siebdeckel unbehindert aufrechterhalten bleibt.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1 einen Querschnitt durch eine Wasserreinigungsvorrichtung gemäß der Erfindung mit in die Hülse des trichterförmigen Teils der Reinigungsvorrichtung eingesetztem patronenförmigem Einsatz,

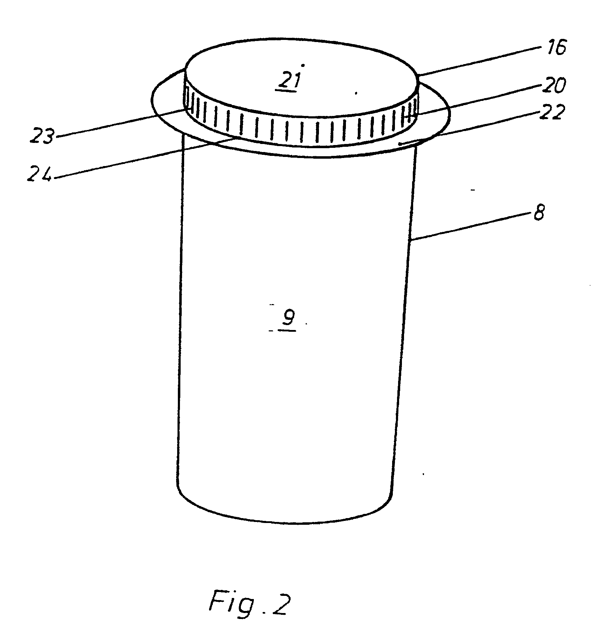

Figur 2 perspektivisch die Ansicht des erfindungsgemäßen Einsatzes,

Figur 3 eine teilweise aufgebrochene Ansicht des Einsatzes, um dessen Aufbau mit den einzelnen Führungsrohren und Wänden darzustellen,

Figur 4 eine perspektivische Ansicht des Verteilers mit Siebdeckel und äußerem, Führungsrohr,

Figur 5 eine perspektivische Ansicht des Becherteils mit unterem Ringflansch und innerem Führungsrohr,

Figur 6 eine ähnliche Ansicht wie Figur 5, wobei nur abgebrochen der obere Bereich gezeigt ist, jedoch bei einer anderen Ausführungsform mit oben geschlossenem, , innerem Führungsrohr,

Figur 7 eine Seitenansicht des gesamten Einsatzes wie gemäß Figur 2, wobei die Innenwandungen jedoch schematisch mit gestrichelten Linien angedeutet sind,

Figur 8 in ähnlicher Darstellungsweise wie Figur 7 den Verteiler mit Siebdeckel und äußeren Führungsrohr und

Figur 9 in ähnlicher Darstellung wie in den Figuren 7 und 8 den Becherteil mit den inneren Führungsrohr und dem unteren Ringflansch.

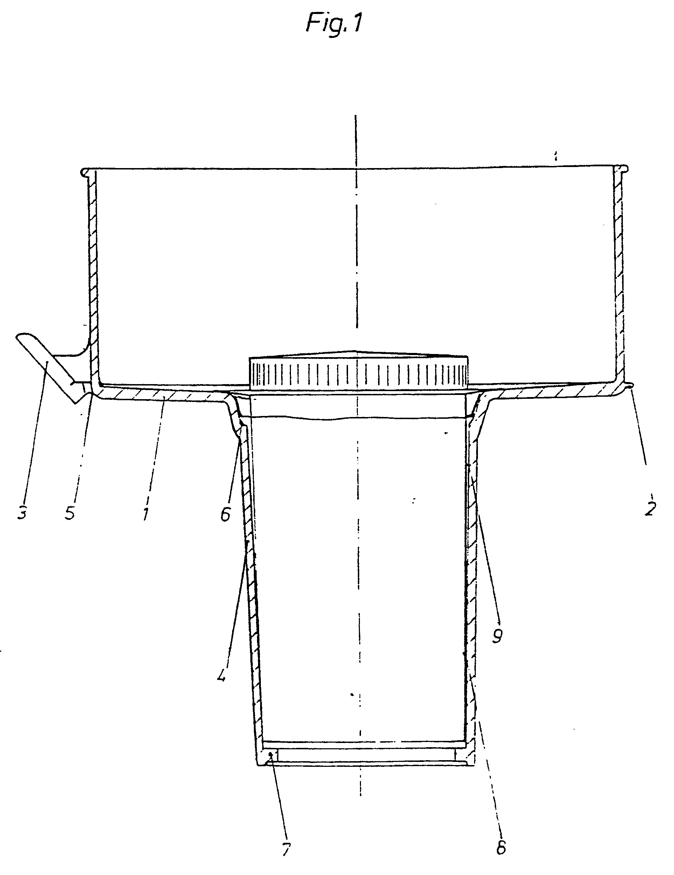

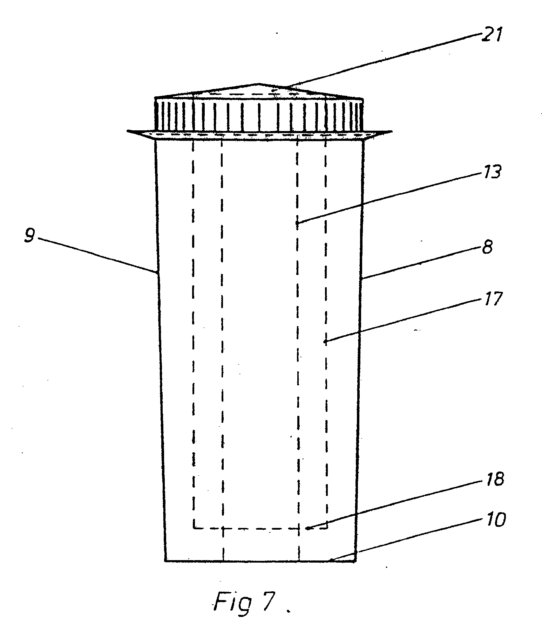

In Figur 1 ist die Gesamtvorrichtung zur Reinigung von Flüssigkeit, vorzugsweise Wasser, gezeigt, bestehend aus einem trichterförmigen Teil 1 und einer einstückig unten angeformten Hülse 4, wobei am äußeren unteren Rand des trichterförmigen Teils 1 ein Flansch 2 zum Auflegen auf den Rand eines nicht gezeigten Behälters vorgesehen ist. An einer Seite, bei der Darstellung der Figur 7 linken Seite, ist eine schräg angestellte Lasche 3 angeformt, die beim Betätigen ein Hochklappen des trichterförmigen Teils 1 mit der einstückig angeformten Hülse 4 um den etwa bei 5 mit dem Kreuz bezeichneten Drehpunkt gestattet. Dadurch kann man mit noch auf dem nicht gezeigten Ausgießbehälter aufgelegten Trichter 1 die bereits gereinigte Flüssigkeit unmittelbar ausgießen.

Die an dem trichterförmigen Teil 1 unten mittig einstückig angeformte Hülse 4 ist oben an ihrem Übergang zu dem trichterförmigen Teil 1 mit einer stufenförmigen Auflage 6 durch Erweiterung ausgestaltet. Diese ringförmige Erweiterung ist jedoch nicht unbedingt notwendig, eignet sich aber für die Verwendung älterer Einsätze und stört den Gebrauch des erfindungsgemäßen Einsatzes nicht.

Bei der hier dargestellten Ausführungsform ist die Hülse 4 schwach konisch nach unten verjüngt ausgestaltet. Sie weist an ihrem unteren Ende einen kurzen horizontal nach innen herausstehenden Rand 7 auf, der auf der Innenseite der Hülsenwandung einige Millimeter nach innen vorspringt, um über den ganzen Umfang innen herumlaufend eine Auflage vorzusehen. Die Auflage könnte auch durch einzelne Ansätze oder durch eine kreuzförmige Tragfläche geschaffen werden.

In die Hülse 4 ist der becherförmige Einsatz 8 einzusetzen.

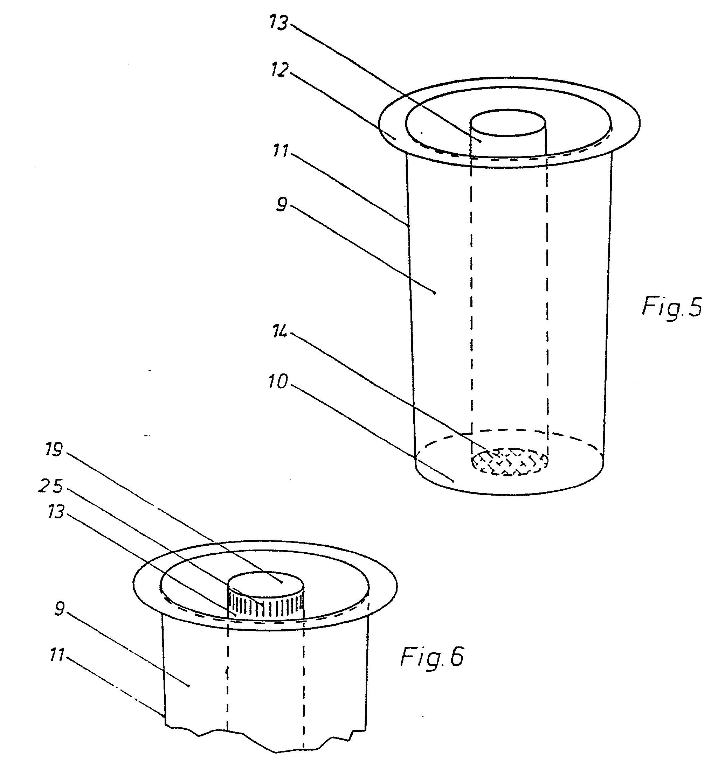

Der Einsatz 8 besteht aus dem Becherteil 11, welches seinerseits aus den annähernd zylinderförmigen Außenwandungen 9, dem Siebboden 10, dem unteren Ringflansch 12 und dem inneren Führungsrohr 13 besteht. Der Siebboden 10 besteht hierbei gemäß der Ausführungsform der Figur 5 aus einer flüssigkeitsundurchlässigen Ringwand und dem mittig im Bereich des inneren Führungsrohres 13 unten angeordneten Kreissieb 14.

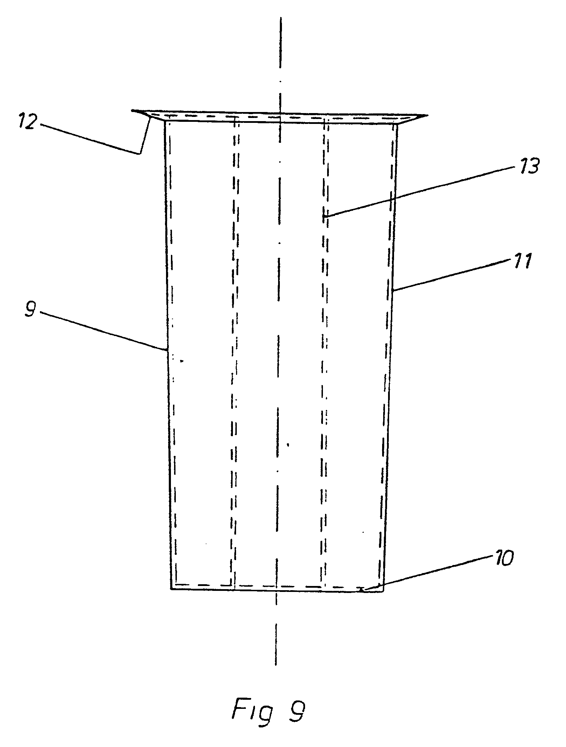

Dieses Sieb kann beispielsweise aus Kunststoff bestehen und auf konzentrischen Kreislinien angeordnete, gekrümmte Siebschlitze aufweisen. Das innere Führungsrohr 13 hat gemäß Darstellung der Figuren 5 und 9 die gleiche Länge wie die Höhe H (Figur 9) der Seitenwandung 9 des Becherteils 11.

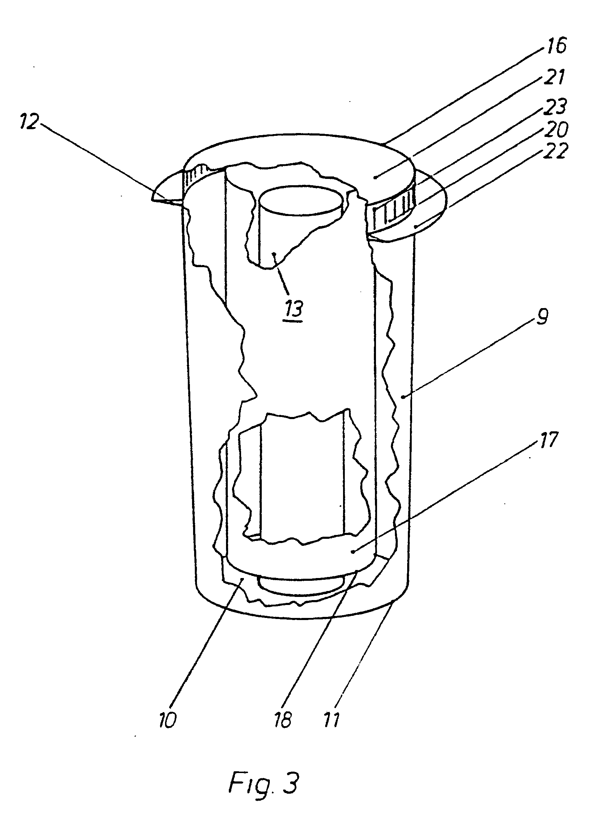

Der Einsatz 8 besteht ferner aus dem allgemein mit 15 bezeichneten Verteiler. Dieser besteht in seinem oberen Teil aus dem Siebdeckel 16 und dem an diesem angebrachten und in das Innere des Einsatzes 8 sich erstreckenden äußeren Führungsrohr 17. Dieses ist an seinem unteren Rand 18 offen. Bei der Ausführungsform nach Figur 5 ist auch das innere Führungsrohr 13 oben offen; bei der Ausführungsform nach Figur 6 ist das innere Führungsrohr 13 aber oben durch den Deckel 19 verschlossen. Außer in Figur 6 soll in allen anderen Figuren, auch in Figur 3, das innere Führungsrohr 13 als oben offen angenommen werden.

Im zusammengebauten Zustand, insbesondere bei der Darstellung der Figuren 3 und 7 sieht man, daß die Führungsrohre 13, 17 ungleichen Durchmesser haben und konzentrisch zueinander angeordnet sind.

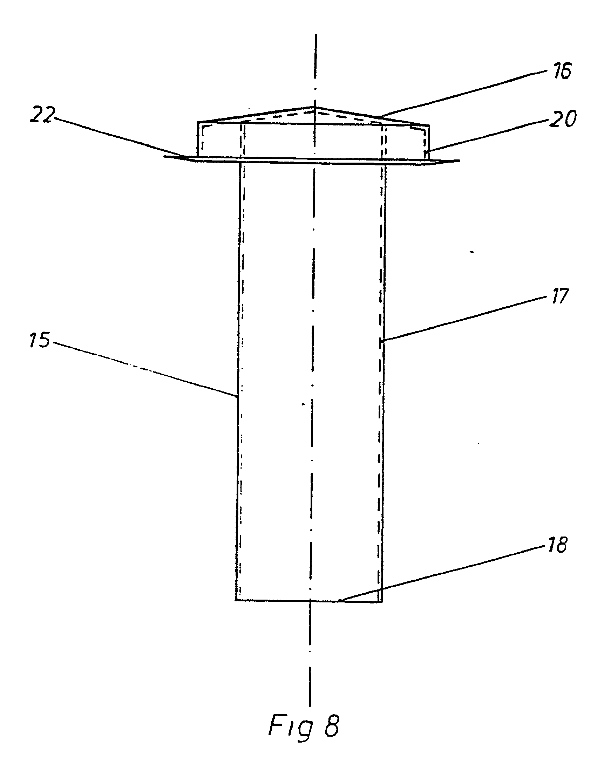

Der Siebdeckel 16 besteht aus einer zylinderförmigen Wandung 20, die nach oben hin von einer vorzugsweise ebenen Stirnwand 21 geschlossen ist. Auf der der Stirnwand 21 gegenüberliegenden Seite der zylinderförmigen Wandung 20 ist ein sich radial nach außen erstreckender oberer Ringflansch 22 angebracht, der gemäß Darstellung in Figur 8 nach unten hin etwas abgeschrägt ist, so daß er zu dem ähnlich abgeschrägten unteren Ringflansch 12 paßt, der dichtend auf dem Boden des trichterförmigen Teils 1 gemäß Darstellung in Figur 1 aufliegt.

Die beiden Flansche 12 und 22 sind nach dem Zusammenbau im Bereich ihrer Ringfläche durch Ultraschallschweißen dichtend miteinander verbunden.

Es sind drei, mindestens aber zwei verschiedene Siebeinrichtungen bei dem Einsatz 8 gemäß der Erfindung vorgesehen.

1. Die erste Siebeinrichtung 14 befindet sich im Siebboden 10, wie man beispielsweise aus Figur 5 erkennen kann.

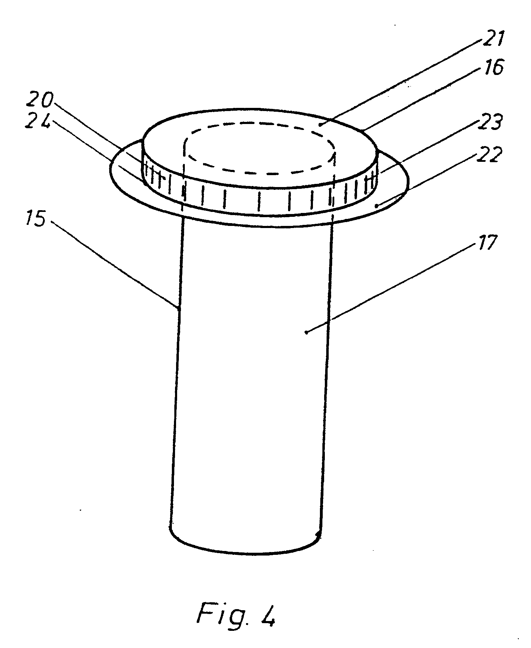

2. Die zweite Siebeinrichtung befindet sich im Siebdeckel 16 und besteht aus geraden und kranzartig angeordneten Siebschlitzen 23. Ihre Richtung ist parallel zur Achsrichtung des größeren und inneren Führungsrohres 17, 13; sie beginnen gemäß Darstellung in Figur 4 am Innenrand 24 des oberen Ringflansches 22 und enden vorzugsweise im Abstand vor dem Kreisumfang der oberen Stirnwand 21. Bei einer anderen, nicht dargestellten Ausführungsform können die Schlitze 23 sich auch bis zu dem Kreisrand der Stirnwand 21 erstrecken und bei einer dritten anderen Ausführungsform vorzugsweise sogar ein Stück weit radial vom Außenumfang der Stirnwand 21 zu deren Mittelpunkt hin, jedoch nur etwa 1 bis 3 mm weit. Bevorzugt ist aber die Ausführungsform, wie sie in der Figur 4 dargestellt ist.

3. Eine dritte Siebeinrichtung 25 ist an oberen Ende des inneren Führungsrohres 13 vorgesehen, welches gemäß Ausführungsform der Figur 6 oben durch die Wandung 19 geschlossen ist. Bei dieser Siebeinrichtung 25 handelt es sich um gerade Siebschlitze, die kranzartig umlaufend vorgesehen sind. Hier kann man sich auch anders ausgestaltete Siebschlitze vorstellen, gegebenenfalls auch Lochreihen, wobei es sich aber stets nur um die Ausführungsform der Figur 6 handelt, bei welcher das innere Führungsrohr 13 oben durch die Wandung 19 geschlossen ist. In diesem Falle kann man das untere Kreissieb 14 gemäß Figur 5 weglassen oder zusätzlich anbringen.

Der Einsatz 8 gemäß der Erfindung ist also wenigstens mit zwei Siebeinrichtungen 14 und 23 versehen, zusätzlich gegebenenfalls mit der Siebeinrichtung 25 oder unter Weglassung der unteren Siebeinrichtung 14 nur stattdessen mit der oberen Siebeinrichtung 25 am inneren Führungsrohr 13.

**Patentansprüche**

1. Einsatz für eine Wasserreinigungsvorrichtung, bestehend aus etwa zylindermantelförmigen Seitenwänden (9) mit an deren Endbereichen angeordnetem Siebdeckel (16) und Siebboden (10) und mit am oberen Ende der Seitenwände (9) befestigter ringförmiger Dichteinrichtung (12, 22), wobei der Einsatz (8) aus einem Becherteil (11) und einem mit diesem verbundenen Verteiler (15) besteht, der mindestens ein sich in das Innere des Einsatzes erstreckendes Führungsrohr (17) und einen Ringflansch (12) zur Befestigung am Becherteil (11) aufweist, wobei der Ringflansch (22) an dem Sieböffnungen (23) aufweisenden Siebdeckel (16) des Verteilers (15) befestigt ist, dadurch gekennzeichnet, daß im Becherteil (11) mit Seitenwand (9) ein sich in das Innere des Einsatzes erstreckendes inneres Führungsrohr (13) angebracht ist, welches Siebeinrichtungen (14, 25) aufweist und gegenüber dem am Verteiler (15) angebrachten äußeren Führungsrohr (17) einen ungleichen Durchmesser derart hat, daß die beiden Führungsrohre (17, 13) im zusammengebauten Zustand konzentrisch zueinander angeordnet sind, daß am offenen Ende des Becherteils (11) ein Ringflansch (12) angebracht ist und daß die Sieböffnungen (23) des Verteilers (15) in einer zylindermantelförmigen Wandung (20) angeordnet sind.

2. Einsatz nach Anspruch 1, dadurch gekennzeichnet, daß die Siebeinrichtungen (14, 25) am inneren Führungsrohr (13) des Becherteils (11) oben und/oder unten angeordnet sind.

3. Einsatz nach Anspruch 1 oder 2, dadurch gekennzeichnet, daß die Siebeinrichtung (25) am oberen Ende des inneren, oben geschlossenen (19) Führungsrohres (13) des Becherteiles (11) kranzartig angeordnete, gerade Siebschlitze aufweist.

4. Einsatz nach einem der Ansprüche 1 bis 3, dadurch gekennzeichnet, daß die Siebschlitze (23) des Siebdeckels (16) des Verteilers (15) gerade und kranzartig angeordnet sind und daß vorzugsweise die Siebschlitze des Siebbodens (14) im Becherteil (11) gekrümmt und auf konzentrischen Kreislinien angeordnet sind.

5. Einsatz nach einem der Ansprüche 1 bis 4, dadurch gekennzeichnet, daß das äußere Führungsrohr (17) des Verteilers (15) am Siebdeckel (16) befestigt ist.

6. Einsatz nach einem der Ansprüche 1 bis 5, dadurch gekennzeichnet, daß die Länge beider Führungsrohre (13, 17) etwa gleich groß ist und daß die Länge des inneren Führungsrohres (13) gleich der Höhe (H) der Seitenwandung (9) des Becherteils (11) ist.

## Claims

1. An insert for a water purification apparatus comprising substantially cylindrical side walls (9) with a filter cover (16) and a filter bottom (10) arranged at the end regions thereof, and with an annular sealing means (12, 22) secured to the upper end of the side walls (9), wherein the insert (8) comprises a bowl portion (11) and a distributor (15) which is connected thereto and which has at least one guide tube (17) extending into the interior of the insert and an annular flange (12) for securing to the bowl portion (11), wherein the annular flange (22) is secured to the filter cover (16) of the distributor (15), which filter cover has filter openings (23), characterised in that disposed in the bowl portion (11) with side wall (9) is an inner guide tube (13) which extends into the interior of the insert and which has filter devices (14, 25) and which is of an unequal diameter relative to the outer guide tube (17) disposed on the distributor (15), such that the two guide tubes (17, 13) are arranged concentrically relative to each other in the assembled condition, that an annular flange (12) is disposed at the open end of the bowl portion (11), and that the filter openings (23) of the distributor (15) are arranged in a cylindrical wall (20).

2. An insert according to clad 1 characterised in that the filter devices (14, 25) on the inner guide tube (13) of the bowl portion (11) are arranged at the top and/or the bottom.

3. An insert according to clad 1 or clad 2 characterised in that the filter device (25) has straight filter slots arranged in a ring-like configuration at the upper end of the inner, upwardly closed (19) guide tube (13) of the bowl portion (11).

4. An insert according to one of clad 1 to 3 characterised in that the filter slots (23) of the filter cover (16) of the distributor (15) are straight and are arranged in a ring-like configuration and that preferably the filter slots of the filter bottom (14) in the bowl portion (11) are curved and arranged on concentric circular lines.

5. An insert according to one of clad 1 to 4 characterised in that the outer guide tube (17) of the distributor (15) is secured to the filter cover (16).

6. An insert according to one of clad 1 to 5 characterised in that the length of both guide tubes (13, 17) is approximately equal and that the length of the inner guide tube (13) is equal to the height (H) of the side wall (9) of the bowl portion (11).

## Revendications

1. Cartouche pour un dispositif d'épuration de l'eau, constituée de parois latérales (9), approximativement on forme de surface latérale de cylindre, comportant un couvercle de filtre (16) et un fond de filtre (10), disposés au niveau de ses zones terminales, et comportant un dispositif d'étanchéité annulaire (12, 22), fixé à l'extrémité supérieure des parois latérales (9), la cartouche (8) étant constituée d'une partie godet (11) et d'un distributeur (15) relié à cette dernière, distributeur qui présente au moins un tube de guidage (17), s'étendant jusqu'à l'intérieur de la cartouche, et une collerette annulaire (12) destinée à assurer une fixation à la partie godet (11), la collerette annulaire (22) étant fixée au couvercle de filtre (16), comportant des ouvertures (23), du distributeur (15), caractérisée en ce que, dans la partie godet (11) comportant une paroi latérale (9), est disposé un tube de guidage intérieur (13), s'étendant jusqu'à l'intérieur de la cartouche, tube comportant des dispositifs de filtration (14, 25) et ayant un diamètre, différent de celui du tube de guidage extérieur (17) disposé contre le distributeur (15), tel que les deux tubes de guidage (17, 13), quand ils sont réunis, sont disposés d'une manière concentrique l'un par rapport à l'autre, qu'une collerette annulaire (12) est disposée à l'extrémité ouverte de la partie godet (11), et que les ouvertures (23) du distributeur (15) dont disposées dans une paroi (20) ayant la forme d'une surface latérale de cylindre.

2. Cartouche selon la revendication 1, caractérisée en ce que les dispositifs de filtration (14, 25) sont disposés à la partie supérieure et/ou à la partie inférieure du tube de guidage intérieur (13) de la partie godet (11).

3. Cartouche selon la revendication 1 ou 2, caractérisée en ce que le dispositif de filtration (25) présente à la partie supérieure du tube de guidage (13) de la partie godet (11), fermé à sa partie supérieure (19), des fentes de filtration droites, disposées en couronne.

4.  Cartouche selon l'une des revendications 1 à 3, caractérisée an ce que les fentes de filtration (23) du couvercle de filtre (16) du distributeur (15) sont disposées droites et en couronne, et que de préférence les fentes du fond de filtre (14) sont courbes dans la partie godet et sont disposées sur des cercles concentriques.

5.  Cartouche selon l'une des revendications 1 à 4, caractérisée en ce que le tube de guidage extérieur (17) du distributeur (15) est fixé au fond de filtre (16).

6.  Cartouche selon l'une des revendications 1 à 5, caractérisée en ce que les deux tubes de guidage (13, 17) ont approximativement une longueur identique, et que la longueur du tube de guidage intérieur (13) est égale à la hauteur (H) de la paroi latérale (9) de la partie godet (11).

## Fig.1

Fig.2

Fig. 3

*Fig. 4*

Fig. 5

Fig. 6

Fig 7.

Fig 8

Fig 9